(19) Europäisches Patentamt
European Patent Office
Office européen des brevets

(11) EP 2 562 950 B1

(12) **EUROPEAN PATENT SPECIFICATION**

(45) Date of publication and mention
of the grant of the patent:
**12.12.2018 Bulletin 2018/50**

(21) Application number: **10850573.6**

(22) Date of filing: **15.10.2010**

(51) Int Cl.:
***H04J 14/02*** *(2006.01)*

(86) International application number:
**PCT/CN2010/077783**

(87) International publication number:
**WO 2011/134242 (03.11.2011 Gazette 2011/44)**

(54) **CALCULATION METHOD AND DEVICE FOR WAVELENGTH ASSIGNMENT**

BERECHNUNGSVERFAHREN UND VORRICHTUNG FÜR WELLENLÄNGENZUTEILUNG

PROCÉDÉ ET DISPOSITIF DE CALCUL PERMETTANT UNE AFFECTATION DE LONGUEUR D'ONDE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.04.2010 CN 201010166662**

(43) Date of publication of application:
**27.02.2013 Bulletin 2013/09**

(73) Proprietor: **ZTE Corporation**
**Shenzhen, Guangdong 518057 (CN)**

(72) Inventors:
  • **WANG, Wenying**
    **Shenzhen**
    **Guangdong 518057 (CN)**

  • **WANG, Jiayu**
    **Shenzhen**
    **Guangdong 518057 (CN)**

(74) Representative: **Lavoix**
    **Bayerstrasse 83**
    **80335 München (DE)**

(56) References cited:
    **EP-A2- 1 303 160      WO-A1-2009/036677**
    **WO-A1-2009/056021    CN-A- 101 227 248**
    **CN-A- 101 640 817      CN-A- 101 834 690**
    **US-A- 6 038 390        US-A1- 2003 198 227**
    **US-B1- 7 466 918        US-B2- 7 277 632**

**Description**

**TECHNICAL FIELD**

The present disclosure relates to the wavelength assignment technique in the optical communication technical field, and in particular to a calculation method and device for wavelength assignment.

**BACKGROUND**

In the current optical layer network constructioning technology, the Dense Wavelength Division Multiplexing (DWDM) technique is commonly used. By using the DWDM technique, a plurality of wavelengths can be multiplexed into an optical fibre, in order to improve the bandwidth of the existing optical fiber backbone network. The traditional DWDN system is substantially a point-to-point line system; in a majority of optical layer networking techniques, an optical layer line system can only be established by terminal stations (TM); The Optical Add-Drop Multiplexer (OADM) emerged subsequently facilitates the development of the network from a point-to-point network to a ring network. However, the OADM can only multiplex one or a fixed number of wavelengths, and the route of the node is fixed, and accordingly, the OADM fails to implement a flexible optical layer network construction indeed. However, the Reconfigurable Optical Add-Drop Multiplexer (ROADM) can control a certain wavelength to perform up and down routing in a node or pass through a node by software, so as to implement dynamic reconfiguration of the optical network. Compared with the optical network consisted of TMs or OADMs, an optical network established through ROADMs can flexibly schedule a service, and therefore the ROADM is widely applied in the current optical network.

The existing wavelength conversion technique is mainly based on Optical-Electrical-Optical (OEO) conversion, but the ROADM can not implement wavelength conversion fully since the number of the OEO devices in the ROADM is limited. Therefore, when the ROADMs in the nodes can not perform wavelength conversion, the wavelengths between the ports on two nodes, at which wavelength conversion are performed, must be the same. This restriction is referred to as a wavelength continuity restriction.

In an optical network established through ROADMs, the wavelength assignment has to be performed for calculating routes. In order to eliminate the limitation caused by the wavelength continuity restriction during wavelength assignment, a route and wavelength assignment algorithm is proposed; namely, when there is a request for establishing an optical path between a certain pair of nodes in the network, first of all, a route is found between a source node and a destination node, and then the wavelength is assigned on the route.

At present, the RWA algorithm is implemented mainly by a layered wavelength graph algorithm, which mainly includes: abstracting each wavelength into a node, and implementing wavelength assignment by selecting a link between the nodes obtained by the abstracting and the original node. Abstracting each wavelength into a node is equivalent to adding a plurality of nodes to the original number of nodes, the number of the added nodes is equal to the total number of the wavelengths; accordingly, wavelength assignment is equivalent to link selection between nodes. The complexity of the formed new routing-path-topological graph through the method is significantly increased. It can be seen that the availability of the method is better when the number of the nodes and the wavelengths is small; but the complexity of the wavelength assignment is increased significantly when the number of the nodes or the wavelengths in the current network is large, and the calculation time is increased geometrically so that the calculation efficiency for the wavelength assignment is low.

The document US 2003/198227A1 discloses a source node, along with transmitting an optical path setup request, notifies towards a destination node available resource information related to itself, pre-assigns the available resources which its own node has notified. Each of transit nodes, along with relaying towards the destination node the optical path setup request which has been received from a previous hop node, notifies towards the destination node available resource information related to itself, and pre-assigns the available resources which each of their own nodes has notified. The destination node, along with reserving a resource which is to be used for setting up an optical path based upon an optical path setup request which has been received, transmits a resource reservation request towards the source node. the transit nodes and the source node actually reserve an available resource which has been pre-assigned, based upon a resource reservation request from a next hop node.

The document EP 1303160A2 discloses a connection between a source node and a destination node is automatically routed and switched in a WDM photonic between, on receipt of a connection request. A switching and routing mechanism selects a plurality of valid link paths using a path tree, where invalid branches are eliminated based on constraints received with the connection request, and on a link and path cost function. A regenerator placement tree is used for determining a plurality of viable regenerator paths for each valid link path. On the regenerator placement tree, non-viable branches are eliminated based on constraints received with the request and on regenerator availability at the intermediate nodes along the respective path. Next, the switching and routing mechanism assigns a set of wavelengths to each viable regenerator path, and estimates the performance of the path using a Q calculator. The regenerator paths are ordered according to their performance and the switching and routing mechanism attempts to setup a path to serve the request.

The document US 6038390A discloses a method of selecting an optimal set of spans for fiber cut simulations for a network carrying a plurality of demand-routes between a plurality of nodes interconnected by a plurality of fiber spans includes the steps of selecting from the plurality of spans a set of critical spans and selecting from the set of critical spans a minimal set of critical spans.

## SUMMARY

In view of the above, the disclosure provides a calculation method and device for wavelength assignment, which can reduce the calculation time for wavelength assignment.

The technical solutions of the disclosure are provided as follows.

A calculation method wavelength assignment comprises:

constructing, for each node on a routing path, a respective inner-node wavelength connectivity matrix an element of which represents a connection cost between a wavelength in an inlet port and a wavelength in an outlet port of the node; and

performing an operation on the inner-node wavelength connectivity matrix of each node, sequentially from a first node on the routing path to a last node on the routing path, according to a preset matrix operation approach;

wherein the preset matrix operation is $\Delta$, and the preset matrix operation approach is indicated as $Z = X\Delta Y = \overset{n}{\underset{r=1}{Min}}\left(x_{ir} + y_{rj}\right)$ , where X and Y represent inner-node wavelength connectivity matrixes of any two nodes on the routing path respectively, n represents a total number of the wavelengths and $x_{ir}$ and $y_{rj}$ are elements in the matrixes X and Y respectively.

The nodes may be divided into optical-optical nodes, electric-electric nodes, optical-electric nodes and electric-optical nodes according to types of the nodes.

Constructing the inner-node wavelength connectivity matrix may comprise: constructing, for each node, the respective inner-node wavelength connectivity matrix according to the type of the node,
if the node is an optical-optical node, the constructed inner-node wavelength connectivity matrix is an n*n matrix;
if the node is an electric-electric node, the constructed inner-node wavelength connectivity matrix is an 1*1 matrix;
if the node is an optical-electric node, the constructed inner-node wavelength connectivity matrix is an n*1 matrix; and
if the node is an electric-optical node, the constructed inner-node wavelength connectivity matrix is an 1*n matrix,
wherein n is a total number of the wavelengths.

In the above technical solution, performing the operation on the inner-node wavelength connectivity matrix of each node sequentially may comprise:
performing the operation on the inner-node wavelength connectivity matrixes of the first node and a second node according to the preset matrix operation approach, with a result of the operation forming a new matrix; then carrying out the matrix operation on the new matrix and the inner-node wavelength connectivity matrix of a third node to obtain another result; and carrying out the matrix operation on the another result and the inner-node wavelength connectivity matrix of a fourth node, and so on, until the matrix calculation for the last node is completed.

Any element $z_{ij}$ in the matrix Z may be indicated as $z_{ij} = Min(x_{i1} + y_{1j}, x_{i2} + y_{2j},...,x_{in} + y_{nj})$, which represents a minimal connection cost from a wavelength i at an inlet port of a node corresponding to the matrix X to a wavelength j at an outlet port of a node corresponding to the matrix Y.

The method may further comprise: recording a value of r corresponding to an element $z_{ij}$ that has a minimum value among elements in the matrix Z, when the matrix operation is performed on the inner-node wavelength connectivity matrixes of any two nodes.

The method may further comprise: after the matrix operation on the inner-node wavelength connectivity matrixes of all the nodes are completed, selecting an element with a minimal value from a result matrix obtained by the matrix operation, and carrying out wavelength assignment for the nodes on the routing path according to a r-sequence corresponding to the element.

The disclosure also provide a calculation device for wavelength assignment, comprising: a matrix construction module and a matrix operation module, wherein
the matrix construction module is configured to construct, for each node on a routing path, a respective inner-node wavelength connectivity matrix an element of which represents a connection cost between a wavelength in an inlet port and a wavelength in an outlet port of the node, and send the constructed inner-node wavelength connectivity matrix to the matrix operation module; and

the matrix operation module is configured to perform an operation on the constructed inner-node wavelength connectivity matrix of each node, sequentially from a first node on the routing path to a last node on the routing path, according to a preset matrix operation approach;

wherein the preset matrix operation is $\Delta$, and the preset matrix operation approach is indicated as

$$Z = X \Delta Y = \underset{r=1}{\overset{n}{Min}} \left( x_{ir} + y_{rj} \right),$$ where X and Y represent inner-node wavelength connectivity matrixes of any two nodes on the routing path respectively, n represents a total number of the wavelengths and $x_{ir}$ and $y_{rj}$ are elements in the matrixes X and Y respectively.

The device may further comprise a wavelength assignment module configured to carry out wavelength assignment according to a result from the operation performed the matrix calculation module,

wherein the matrix operation module may be further configured to send the result to the wavelength assignment module.

In the calculation method and device provided by the disclosure, an inner-node wavelength connectivity matrix is constructed for each node on a routing path, and an operation is performed on the inner-node wavelength connectivity matrix of each node sequentially from a first node on the routing path to a last node on the routing path, according to a preset matrix operation approach. The calculation for wavelength assignment according to the disclosure refers to performing the operation on the constructed inner-node wavelength connectivity matrix according to the preset matrix operation approach, wherein the calculation corresponding to the preset matrix operation approach is simple, and the core idea of the calculation is to get a minimal value.

In addition, the calculation process according to the disclosure can be simplified by applying an existing matrix operation optimization approach in the mathematics field. For example, the matrix operation may be performed after simplifying a complicated matrix, or a distributed matrix operation approach and the like may be employed. It can be seen that, compared to the existing layered wavelength graph algorithm, the calculation method and principle for wavelength assignment is theoretical and is simple to be implemented, therefore reducing the calculating time for the wavelength assignment.

## BRIEF DESCRIPTION OF THE DRAWINGS

Fig. 1 is a flow chart of a process for implementing a calculation method for wavelength assignment according to the disclosure;

Fig. 2 is a topological diagram of a routing path according to an embodiment of the disclosure; and

Fig. 3 is a schematic view of the structure of a calculation device for wavelength assignment according to the disclosure.

## DETAILED DESCRIPTION

The basic idea of the disclosure is that: constructing, for each node on a routing path, a respective inner-node wavelength connectivity matrix; calculating the inner-node wavelength connectivity matrix of each node, sequentially from the first node on the routing path to the last node on the routing path, according to a preset matrix operation method; and performing wavelength assignment according to a result from the operation.

In the disclosure, nodes in an existing optical network are divided into four types according to the use of the OEO conversion device by each node, i.e., optical-optical node, electric-electric node, optical-electric node and electric-optical node, wherein both an inlet port and an outlet port of the electric-electric node use wavelength resources; both the inlet port and the outlet port of the electric-electric node use time slot resources; the inlet port of the optical-electric node uses wavelength resources, and the outlet port of the optical-electric node uses time slot resources; and the inlet port of the electric-optical node uses time slot resources, and the outlet port of the electric-optical node uses wavelength resources.

The disclosure will further be described in detail in connection with specific embodiments, with reference to accompanying drawings.

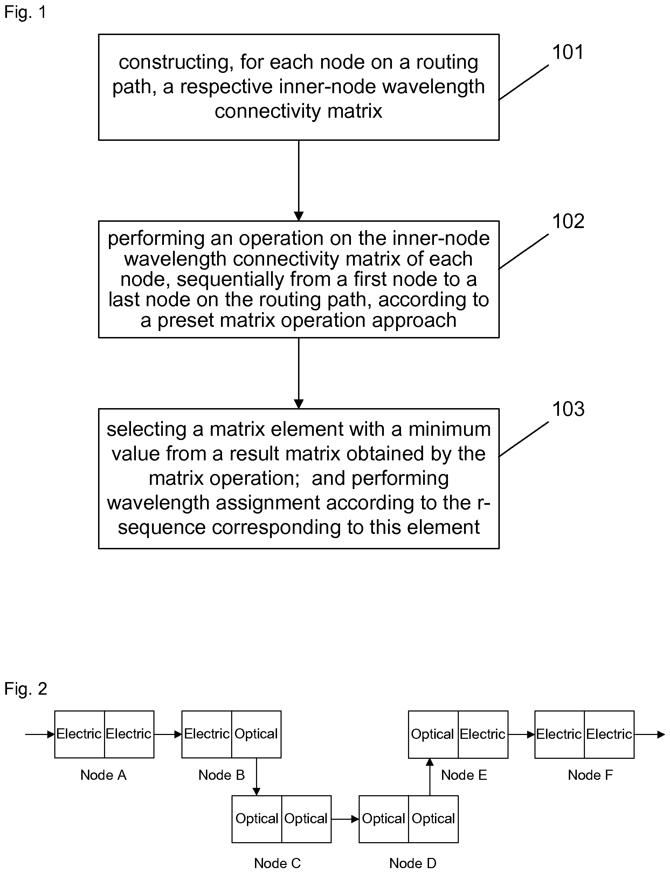

Fig. 1 is a flow chart of a process for implementing a calculation method for wavelength assignment according to the disclosure, as shown in Fig. 1, the process for implementing the calculation method includes the following steps.

Step 101, constructing, for each node on a routing path, a respective inner-node wavelength connectivity matrix.

Specifically, each node on the routing path constructs its own corresponding inner-node wavelength connectivity matrix according to the type of the node. Wherein the nodes can divided into optical-optical node, electric-electric node, optical-electric node and electric-optical node, according to the types; for the above-mentioned four types of nodes, the connection cost is set to be 0 for a direct connection wavelength which means that a wavelength received at an inlet port of a certain node is directly issued out from an outlet port of the node without OEO conversion; when a certain connection cost is need for the wavelength to perform OEO conversion, the connection cost is set to be k, wherein $0<k<\infty$; when the wavelength in the inlet port of the node and the wavelength in the outlet port of the node can not be connected, the connection cost is $\infty$.

A method for constructing the inner-node wavelength connectivity matrix corresponding to the above-mentioned four types of nodes is described below.

1) In the case of the optical-optical node, since both the inlet port and the outlet port of the optical-optical node use wavelength resources, a n*n matrix is constructed for the optical-optical node so as to model the inner-node wavelength connection matrix, the n*n matrix can be indicated as:

$$A = \begin{pmatrix} a_{11} & \cdots & a_{1n} \\ \vdots & \ddots & \vdots \\ a_{n1} & \cdots & a_{nn} \end{pmatrix} \qquad \text{equation (1)}$$

where, n is the total number of the wavelengthes, any element $a_{ij}$ in the matrix A represents the connection cost between wavelength i and wavelength j, the value of $a_{ij}$ lies within a range of $[0,\infty]$. When $a_{ij} = 0$, then $i = j$, which indicates that the wavelength i runs straightforwards from the inlet port to the outlet port; when $a_{ij} = k$, it is indicated that the connection cost is k when the inlet port uses the wavelength i and the outlet port uses the wavelength j; when $a_{ij} = \infty$, it is indicated that the connection can not be performed when the inlet port uses the wavelength i and the outlet port uses the wavelength j.

2) In the case of the electric-electric node, since both the inlet port and the outlet port of the electric-electric node use time slot resources, a 1*1 matrix is constructed for the electric-electric node so as to model the inner-node wavelength connection matrix, the 1*1 matrix can be indicated as:

$$B = \begin{pmatrix} b \end{pmatrix} \qquad \text{equation (2)}$$

where, the value of b is either 0 or $\infty$, since both the inlet and outlet port of the node use time slot resources, there is no wavelength selection problem and only the connectivity problem has to be concerned, namely, there is a time slot available for connection between the inlet and outlet ports when b=0, and there is no time slot available for connection between the inlet and outlet ports when b=$\infty$.

3) In the case of the optical-electric node, since the inlet port of the optical-electric node uses the wavelength resources and the outlet port uses the time slot resources, a n*1 matrix can be constructed for the optical-electric node so as to model the inner-node wavelength connection matrix, the n*1 matrix can be indicated as:

$$C = \begin{pmatrix} c_1 \\ \vdots \\ \vdots \\ c_n \end{pmatrix} \qquad \text{equation (3)}$$

where, the value of $c_{i1}$ lies within a range of $[0,\infty]$, when $c_{i1}=1$, then i=1, which indicates that the wavelength 1 runs straightforwards from the inlet port to the outlet port; when $c_{i1}=k$, it indicates that the connection cost is k when the inlet port uses the wavelength i; when $c_{i1}=\infty$, it indicates that the connection can not be enabled when the inlet port uses the wavelength i.

4) In the case of the electric-optical node, since the inlet port of the electric-optical node uses time slot resources and the outlet port uses wavelength resources, a 1*n matrix can be constructed so as to model the inner-node wavelength connection matrix, the 1*n matrix can be indicated as:

$$D = \begin{pmatrix} d_{11} & \cdots & d_{1n} \end{pmatrix} \qquad \text{equation (4)}$$

where, $d_{1j}$ lies within a range of $[0,\infty]$, when $d_{1j}=0$, then j=1, which indicates the inlet port and the outlet port of the node are directly connected when the wavelength i is outputted from the outlet port of the node; when $d_{1j}=k$, it indicates that the connection cost is k when the outlet port uses the wavelength j; when $d_{1j}=\infty$, it indicates that the connection can not be enabled when the outlet port uses the wavelength j.

Step 102, performing operations for the inner-node wavelength connectivity matrix for each node according to a preset matrix operation approach, sequentially from the first node on the routing path to the last node on the routing path.

Specifically, an optical network management system side performs an operation, starting from the first node on the routing path, on the inner-node wavelength connectivity matrixes corresponding to the first and second nodes according to the preset matrix operation approach, as a result of which a new matrix is formed; a matrix operation is performed on the new matrix and the inner-node wavelength connectivity matrix of a third node to obtain another matrix; a matrix operation is performed on the another matrix and the inner-node wavelength connectivity matrix of a fourth node, and so on, until the last node on the routing path is completed with the matrix calculation.

In the disclosure, the matrix operation on the inner-node wavelength connectivity matrixes is set to be $\Delta$, and the calculation equation can be indicated as:

$$Z = X \Delta Y = \overset{n}{\underset{r=1}{Min}}\left( x_{ir} + y_{rj} \right) \qquad \text{equation (5)}$$

where, X and Y represent the inner-node wavelength connectivity matrix of any two nodes on the routing path respectively, $x_{ir}$ and $y_{rj}$ are elements in matrixes X and Y respectively. Assuming the $X\Delta Y$ is calculated as matrix Z, any element $z_{ij}$ in the matrix Z can be indicated as:

$$z_{ij} = Min(x_{i1} + y_{1j}, x_{i2} + y_{2j}, ..., x_{in} + y_{nj}) \qquad \text{equation (6)}$$

wherein it is assumed that matrixes X and Y correspond to a node A1 and a node A2 respectively, then $z_{ij}$ represents the minimal connection cost from the wavelength i at the inlet port of the node A1 to the wavelength j at the outlet port of the node A2. It can be concluded from the equation (6) that all the elements $z_{ij}$ in the matrix Z is obtained by selecting the minimum value for each time.

Here, if there are a plurality of nodes on the routing path, then the corresponding inner-node wavelength connectivity matrixes are: A1, A2...Am; in this case the result of $Z = A_1 \Delta A_2 \Delta \cdots \Delta A_m$ represents a minimal connection cost from the wavelength at the inlet port of the first node A1 to the wavelength at the outlet port of the last node, namely, the matrix operation is performed on the inner-node wavelength connectivity matrix of each node on the routing path from the first node A1 to the last node Am, a final result matrix Z represents the minimal connection cost from the inlet port of the first node to the outlet port of the last node.

In the disclosure, during the process of the matrix operation, when a matrix operation on the inner-node wavelength connectivity matrixes of any two nodes is being carried out, the values of r corresponding to the individual minimum element $z_{ij}$ in the result matrix Z, namely the r corresponding to the minimum $x_{ir} + y_{rj}$ is also recorded, wherein $z_{ij}$ is not equal to $\infty$, because if $z_{ij}$ is equal to $\infty$, then the wavelength i at the inlet port of the first node can not be connected to the wavelength j at the outlet port of the last node. In this case, each element $z_{ij}$ in the result matrix Z obtained through the matrix operation corresponds to an r-sequence, which is available for the subsequent wavelength assignment between the nodes. For example, when the matrix operation are performed on the inner-node wavelength connectivity matrixes of the node A1 and the node A2, the value of the r corresponding to the $x_{ir} + y_{rj}$ of each element $z_{ij}$ that has the minimum value is recorded, in this case, if $z_{ij}$ is selected for the wavelength assignment, the wavelength assigned between the node A1 and the node A2 is wavelength r, that is to say, the wavelength assigned between the outlet port of the node A1 and the inlet port of the node A2 is the wavelength r.

Specifically, if the inner-node wavelength connectivity matrixes of the node A1 and the node A2 are 2*2 matrixes A and B respectively, the elements of the matrix A are $a_{11}$, $a_{12}$, $a_{21}$ and $a_{22}$, the elements of the matrix B are $b_{11}$, $b_{12}$, $b_{21}$ and $b_{22}$, $A\Delta B$ is calculated as a matrix C, which includes four elements: $c_{11}$, $c_{12}$, $c_{21}$ and $c_{22}$. For example, if $c_{11}$ is taken for the wavelength assignment, $c_{11}= Min (a_{11}+b_{11}, a_{12}+b_{21})$, if $a_{12} + b_{21}$ is smaller than $a_{11} + b_{11}$, and the value of the r corresponding to $a_{12} + b_{21}$ is 2, then the wavelength assignment 1-2-1 exists between the node A1 and the node A2, namely, the wavelength 1 from the inlet port of the node A1 is converted into the wavelength 2 by the node A1, and the wavelength 2 is converted into the wavelength 1 by the node A2 to get out from the outlet port of the node A2.

Here, during the calculation in this step, the calculation process according to the disclosure can be simplified by applying an existing matrix operation optimization method in the mathematics field. For example, the matrix operation may be performed after simplifying a complicated matrix, or a distributed matrix operation method and the like may be employed, so as to reduce the complexity in the wavelength assignment calculation, therefore reducing the calculation time for the wavelength assignment.

A step 103 is also included in the disclosure: selecting a minimum matrix element from the result matrix obtained by the matrix operation; and performing wavelength assignment among the nodes on the routing path according to the r-sequence corresponding to this element.

Specifically, the final result matrix is obtained through the matrix operation process described in step 102; each of the non-oo elements $z_{ij}$ in the result matrix corresponds to one r-sequence for wavelength assignment, that is to say, each element $z_{ij}$ in the result matrix corresponds to a wavelength assignment method.

Here, since different wavelength resources have different connection costs, while the use of the wavelength resources in each node and link is also different with respect to different r-sequence for wavelength assignment. Therefore, the wavelength sequences have different connection costs. If the r-sequence which has the minimal connection cost for the wavelength resources is selected from the r-sequences to perform wavelength assignment among the nodes on the routing path, then the optimum wavelength assignment effect is achieved. Wherein, the r-sequence which has the minimal connection cost for wavelength resources is an r-sequence corresponding to a minimal element $z_{ij}$ in the result matrix, and thus $z_{ij} \neq \infty$.

The calculation method for wavelength assignment according to the disclosure will be described in relation to two embodiments.

Embodiment 1

In this example, there are six nodes on a routing path, as shown in Fig. 2, which respectively are: a node A, a node B, a node C, a node D, a node E and a node F, wherein the node A which is an electric-electric node is the first node; the node B is an electric-optical node; the node C is an optical-optical node; the node D is an optical-optical node; the node E is an optical-electric node; and the node F which is an electric-electric node is the last node.

The inner-node wavelength connectivity matrixes constructed for the nodes A-F are: a 1*1 matrix A, a 1*n matrix B, a n*n matrix C, a n*n matrix D, a n*1 matrix E and a 1*1 matrix F, and then the following matrix calculation is performed starting from the node A:

the Δ operation is performed on the matrix A(1*1) and the matrix B(1*n), the result of this operation is set to be a matrix B1(1*n), and the r corresponding to the matrix B1(1*n) is recorded;

the Δ operation is performed on the matrix B1(1*n) and the matrix C(n*n), the result of this operation is set to be a matrix C1(1*n), and the r corresponding to the matrix C1(1*n) is recorded;

the Δ operation is performed on the matrix C1(1*n) and the matrix D(n*n), the result of this operation is set to be a matrix D1(1*n), and the r corresponding to the matrix D1(1*n) is recorded;

the Δ operation is performed on the matrix D1(1*n) and the matrix E(n*1), the result of this operation is set to be a matrix E1(1*1), and the r corresponding to the matrix E1(1*1) is recorded; and

the Δ operation is performed on the matrix E1(1*1) and the matrix F(1*1), the result of this operation is set to be a matrix F1(1*1), and the r corresponding to the matrix F1(1*1) is recorded.

By applying the above-mentioned calculation procedure, the matrix F(1*1) reflects the wavelength connectivity from the inlet port of the first node A to the outlet port of the last node F; since there is only one element in the result matrix F1 of the matrix operation, the wavelength assignment is performed on the routing path according to the recorded r-sequence corresponding to this element.

Embodiment 2

In this example, there are only two nodes on a routing path, which are the node C and D in the Fig. 2 respectively, wherein the node C which is an optical-optical node is a first node; and the node D which is an optical-optical node is a last node.

The inner-node wavelength connectivity matrixes constructed for the node C and D are a n*n matrix C, and a n*n matrix D respectively, and then the following matrix operation is performed starting from the node C:
the Δ operation is performed for the matrix C(n*n) and the matrix D(n*n), the result of the operation is set to be a matrix D1(n*n), and r corresponding to the matrix D1(n*n) is recorded.

By applying the above-mentioned calculation procedure, the matrix D1(n*n) reflects the wavelength connectivity from the inlet port of the first node C to the outlet port of the last node D; a minimum non-∞ element $d_{ij}$ is selected from the result matrix D1 of the matrix operation, and the wavelength assignment is performed on the routing path by applying the recorded r corresponding to $d_{ij}$, wherein the assignment is an optimum wavelength assignment.

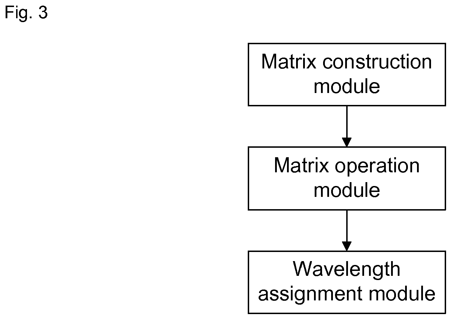

In order to implement the above-mentioned method, the disclosure also provides a calculation device for wavelength assignment, as shown in Fig. 3, the device may include: a matrix construction module in each of the nodes and a matrix operation module at an optical network management system side, wherein
the matrix construction module is configured to construct, for each node on a routing path, a respective inner-node wavelength connectivity matrix, and send the constructed inner-node wavelength connectivity matrix to the matrix operation module at the optical network management system side; and
the matrix operation module is configured to perform an operation on the constructed inner-node wavelength connectivity matrix of each node, sequentially from a head node on the routing path to a tail node on the routing path, according to a preset matrix operation approach.

The device may further include a wavelength assignment module at the network management system side, which is configured to carry out wavelength assignment according to a calculation result from the matrix operation module.

Accordingly, the matrix operation module may be further configured to send the operation result to the wavelength assignment module.

All those described above are only the preferred embodiments of the disclosure and not intended to limit the protection scope of the disclosure. Any modification, equivalent substitute and improvement within the principle of the disclosure will fall in the protection scope of the disclosure.

**Claims**

1. A calculation method for wavelength assignment, **characterized in that**, comprising:

constructing (101), for each node on a routing path, a respective inner-node wavelength connectivity matrix an element of which represents a connection cost between a wavelength in an inlet port and a wavelength in an outlet port of the node; and
performing (102) an operation on the inner-node wavelength connectivity matrix of each node, sequentially from a first node on the routing path to a last node on the routing path, according to a preset matrix operation approach; wherein the preset matrix operation is Δ, and the preset matrix operation approach is indicated as

$$Z = X\Delta Y = \overset{n}{\underset{r=1}{Min}}\left(x_{ir} + y_{rj}\right)$$ , where X and Y represent inner-node wavelength connectivity matrixes of any two nodes on the routing path respectively, n represents a total number of the wavelengths and $x_{ir}$ and $y_{rj}$ are elements in the matrixes X and Y respectively and Z is the final result matrix.

2. The calculation method for wavelength assignment according to claim 1, wherein the nodes are divided into optical-optical nodes, electric-electric nodes, optical-electric nodes and electric-optical nodes according to types of the nodes.

3. The calculation method for wavelength assignment according to claim 2, wherein constructing the inner-node wavelength connectivity matrix comprises: constructing, for each node, the respective inner-node wavelength connectivity matrix according to the type of the node,
if the node is an optical-optical node, the constructed inner-node wavelength connectivity matrix is an n*n matrix;
if the node is an electric-electric node, the constructed inner-node wavelength connectivity matrix is an 1*1 matrix;
if the node is an optical-electric node, the constructed inner-node wavelength connectivity matrix is an n*1 matrix; and
if the node is an electric-optical node, the constructed inner-node wavelength connectivity matrix is an 1*n matrix, wherein n is a total number of the wavelengths.

4. The calculation method for wavelength assignment according to any one of claims 1 to 3, wherein performing the operation on the inner-node wavelength connectivity matrix of each node sequentially comprises:
performing the operation on the inner-node wavelength connectivity matrixes of the first node and a second node according to the preset matrix operation approach, with a result of the operation forming a new matrix; then carrying out the matrix operation on the new matrix and the inner-node wavelength connectivity matrix of a third node to obtain another result; and carrying out the matrix operation on the another result and the inner-node wavelength connectivity matrix of a fourth node, and so on, until the matrix calculation for the last node is completed.

5. The calculation method for wavelength assignment according to claim 1, wherein any element $z_{ij}$ in the matrix Z is indicated as $z_{ij} = Min(x_{i1} + y_{1j}, x_{i2} + y_{2j},...,x_{in} + y_{nj})$, which represents a minimal connection cost from a wavelength i at an inlet port of a node corresponding to the matrix X to a wavelength j at an outlet port of a node corresponding to the matrix Y.

6. The calculation method for wavelength assignment according to claim 1 or 5, further comprising: recording a value of r corresponding to an element $z_{ij}$ that has a minimum value among elements in the matrix Z, when the matrix operation is performed on the inner-node wavelength connectivity matrixes of any two nodes.

7. The calculation method for wavelength assignment according to claim 6, further comprising: after the matrix operation on the inner-node wavelength connectivity matrixes of all the nodes are completed, selecting an element with a minimal value from a result matrix obtained by the matrix operation, and carrying out wavelength assignment for the nodes on the routing path according to a r-sequence corresponding to the element.

8. A calculation device for wavelength assignment, **characterized in that**, comprising: a matrix construction module and a matrix operation module, wherein
the matrix construction module is configured to construct, for each node on a routing path, a respective inner-node wavelength connectivity matrix an element of which represents a connection cost between a wavelength in an inlet port and a wavelength in an outlet port of the node, and send the constructed inner-node wavelength connectivity matrix to the matrix operation module; and
the matrix operation module is configured to perform an operation on the constructed inner-node wavelength connectivity matrix of each node, sequentially from a first node on the routing path to a last node on the routing path, according to a preset matrix operation approach;
wherein the preset matrix operation is $\Delta$, and the preset matrix operation approach is indicated as

$$Z = X \Delta Y = \overset{n}{\underset{r=1}{Min}} \left( x_{ir} + y_{rj} \right)$$

, where X and Y represent inner-node wavelength connectivity matrixes of any two nodes on the routing path respectively, n represents a total number of the wavelengths and $x_{ir}$ and $y_{rj}$ are elements in the matrixes X and Y respectively and Z is the final result matrix.

9. The calculation device for wavelength assignment according to claim 8, further comprising a wavelength assignment module configured to carry out wavelength assignment according to a result from the operation performed the matrix calculation module,
wherein the matrix operation module is further configured to send the result to the wavelength assignment module.

**Patentansprüche**

1. Berechnungsverfahren für Wellenlängenzuteilung, **dadurch gekennzeichnet, dass** es Folgendes umfasst:

Einrichten (101) einer entsprechenden Innenknoten-Wellenlängen-Verbindungsfähigkeitsmatrix, von welcher ein Element einen Verbindungsaufwand zwischen einer Wellenlänge in einem Eingangsanschluss und einer Wellenlänge in einem Ausgangsanschluss eines Knotens darstellt, für jeden Knoten auf einem Routing-Pfad und Durchführen (102) einer Operation an der Innenknoten-Wellenlängen-Verbindungsfähigkeitsmatrix jedes Knotens, nacheinander von einem ersten Knoten auf dem Routing-Pfad zu einem letzten Knoten auf dem Routing-Pfad gemäß einem voreingestellten Matrixoperationsansatz,
wobei die voreingestellte Matrixoperation $\Delta$ ist und der voreingestellte Matrixoperationsansatz als
$$Z = X \Delta Y = \overset{n}{\underset{r=1}{Min}} \left( x_{ir} + y_{rj} \right)$$ angegeben ist, wobei X und Y jeweils Innenknoten-Wellenlängen-Verbindungsfähigkeitsmatrizen für zwei beliebige Knoten auf dem Routing-Pfad darstellen, n eine Gesamtanzahl der Wellenlängen darstellt und $x_{ir}$ und $y_{rj}$ Elemente in den Matrizen X beziehungsweise Y sind und Z die fertige Ergebnismatrix ist.

2. Berechnungsverfahren für Wellenlängenzuteilung nach Anspruch 1, wobei die Knoten gemäß ihrer Art in Optisch-Optisch-Knoten, Elektrisch-Elektrisch-Knoten, Optisch-Elektrisch-Knoten und Elektrisch-Optisch Knoten unterteilt sind.

3. Berechnungsverfahren für Wellenlängenzuteilung nach Anspruch 2, wobei das Einrichten der Innenknoten-Wellenlängen-Verbindungsfähigkeitsmatrix Folgendes umfasst:

   Einrichten der entsprechenden Innenknoten-Wellenlängen-Verbindungsfähigkeitsmatrix für jeden Knoten gemäß der Art des Knotens,
   wenn der Knoten ein Optisch-Optisch-Knoten ist, ist die eingerichtete Innenknoten-Wellenlängen-Verbindungsfähigkeitsmatrix eine n*n-Matrix,
   wenn der Knoten ein Elektrisch-Elektrisch-Knoten ist, ist die eingerichtete Innenknoten-Wellenlängen-Verbindungsfähigkeitsmatrix eine 1*1-Matrix,
   wenn der Knoten ein Optisch-Elektrisch-Knoten ist, ist die eingerichtete Innenknoten-Wellenlängen-Verbindungsfähigkeitsmatrix eine n*1-Matrix, und
   wenn der Knoten ein Elektrisch-Optisch Knoten ist, ist die eingerichtete Innenknoten-Wellenlängen-Verbindungsfähigkeitsmatrix eine 1*n-Matrix,
   wobei n die Gesamtanzahl der Wellenlängen ist.

4. Berechnungsverfahren für Wellenlängenzuteilung nach einem der Ansprüche 1 bis 3, wobei das Nacheinander-Durchführen der Operation an der Innenknoten-Wellenlängen-Verbindungsfähigkeitsmatrix jedes Knotens Folgendes umfasst:
   Durchführen der Operation an den Innenknoten-Wellenlängen-Verbindungsfähigkeitsmatrizen des ersten Knotens und eines zweiten Knotens gemäß dem voreingestellten Matrixoperationsansatz, wobei ein Ergebnis der Operation eine neue Matrix bildet, dann Ausführen der Matrixoperation an der neuen Matrix und der Innenknoten-Wellenlängen-Verbindungsfähigkeitsmatrix eines dritten Knotens, um ein weiteres Ergebnis zu erzielen, und Ausführen der Matrixoperation an dem weiteren Ergebnis und der Innenknoten-Wellenlängen-Verbindungsfähigkeitsmatrix eines vierten Knotens und so weiter, bis die Matrixberechnung für den letzten Knoten abgeschlossen ist.

5. Berechnungsverfahren für Wellenlängenzuteilung nach Anspruch 1, wobei ein Element $z_{ij}$ in der Matrix Z als $z_{ij}=Min(x_{i1} + y_{1j}, x_{i2} + y_{2j},...,x_{in} + y_{nj})$ angegeben ist, was einen minimalen Verbindungsaufwand von einer Wellenlänge i an einem Eingangsanschluss eines Knotens, welcher der Matrix X entspricht, zu einer Wellenlänge j an einem Ausgangsanschluss eines Knotens, welcher der Matrix Y entspricht, darstellt.

6. Berechnungsverfahren für Wellenlängenzuteilung nach Anspruch 1 oder 5, ferner Folgendes umfassend: Aufzeichnen eines Werts von r entsprechend einem Element $z_{ij}$, das von Elementen in der Matrix Z einen minimalen Wert aufweist, wenn die Matrixoperation an den Innenknoten-Wellenlängen-Verbindungsfähigkeitsmatrizen von zwei beliebigen Knoten durchgeführt wird.

7. Berechnungsverfahren für Wellenlängenzuteilung nach Anspruch 6, ferner Folgendes umfassend: nachdem die Matrixoperation an den Innenknoten-Wellenlängen-Verbindungsfähigkeitsmatrizen aller Knoten abgeschlossen ist, Auswählen eines Elements mit einem minimalen Wert aus einer Ergebnismatrix, die durch die Matrixoperation erzielt wird, und Ausführen von Wellenlängenzuteilung für die Knoten auf dem Routing-Pfad gemäß einer r-Sequenz, die dem Element entspricht.

8. Berechnungsvorrichtung für Wellenlängenzuteilung, **dadurch gekennzeichnet, dass** sie Folgendes umfasst: ein Matrixeinrichtungsmodul und ein Matrixoperationsmodul, wobei:

   das Matrixeinrichtungsmodul dafür konfiguriert ist, für jeden Knoten auf einem Routing-Pfad eine entsprechende Innenknoten-Wellenlängen-Verbindungsfähigkeitsmatrix einzurichten, von welcher ein Element einen Verbindungsaufwand zwischen einer Wellenlänge in einem Eingangsanschluss und einer Wellenlänge in einem Ausgangsanschluss des Knotens darstellt, und die eingerichtete Innenknoten-Wellenlängen-Verbindungsfähigkeitsmatrix an das Matrixoperationsmodul zu senden, und
   das Matrixoperationsmodul dafür konfiguriert ist, eine Operation an der Innenknoten-Wellenlängen-Verbindungsfähigkeitsmatrix jedes Knotens, nacheinander von einem ersten Knoten auf dem Routing-Pfad zu einem letzten Knoten auf dem Routing-Pfad gemäß einem voreingestellten Matrixoperationsansatz durchzuführen,

   wobei die voreingestellte Matrixoperation $\Delta$ ist und der voreingestellte Matrixoperationsansatzes als

$$Z = X \Delta Y = \overset{n}{\underset{r=1}{Min}} \left( x_{ir} + y_{rj} \right)$$ angegeben ist, wobei X und Y jeweils Innenknoten-Wellenlängen-Verbindungsfähigkeitsmatrizen für zwei beliebige Knoten auf dem Routing-Pfad darstellen, n eine Gesamtanzahl der Wellenlängen darstellt und $x_{ir}$ und $y_{rj}$ Elemente in den Matrizen X beziehungsweise Y sind und Z die fertige Ergebnismatrix ist.

9. Berechnungsvorrichtung für Wellenlängenzuteilung nach Anspruch 8, ferner ein Wellenlängenzuteilungsmodul umfassend, das dafür konfiguriert ist, gemäß einem Ergebnis der vom Matrixberechnungsmodul ausgeführten Operation Wellenlängenzuteilung auszuführen, wobei das Matrixoperationsmodul ferner dafür konfiguriert ist, das Ergebnis an das Wellenlängenzuteilungsmodul zu senden.

## Revendications

1. Procédé de calcul pour l'attribution de longueur d'onde, **caractérisé en ce qu'**il comprend :

la construction (101), pour chaque noeud sur un trajet d'acheminement, d'une matrice de connectivité de longueur d'onde de noeud intérieur respective dont un élément représente un coût de connexion entre une longueur d'onde dans un port d'entrée et une longueur d'onde dans un port de sortie du noeud ; et
l'exécution (102) d'une opération sur la matrice de connectivité de longueur d'onde de noeud intérieur de chaque noeud, séquentiellement d'un premier noeud sur le trajet d'acheminement à un dernier noeud sur le trajet d'acheminement, conformément à une approche d'opération matricielle prédéterminée ;
dans lequel l'opération matricielle prédéterminée est Δ, et l'approche d'opération matricielle prédéterminée est indiquée par $Z = X \Delta Y = \overset{n}{\underset{r=1}{Min}} \left( x_{ir} + y_{rj} \right)$, où X et Y représentent des matrices de connectivité de longueur d'onde de noeud intérieur de deux noeuds quelconques sur le trajet d'acheminement respectivement, n représente un nombre total des longueurs d'onde et $x_{ir}$ et $y_{rj}$ sont des éléments dans les matrices X et Y respectivement et Z est la matrice de résultat final.

2. Procédé de calcul pour l'attribution de longueur d'onde selon la revendication 1, dans lequel les noeuds sont divisés en des noeuds optique-optique, des noeuds électrique-électrique, des noeuds optique-électrique et des noeuds électrique-optique conformément aux types des noeuds.

3. Procédé de calcul pour l'attribution de longueur d'onde selon la revendication 2, dans lequel la construction de la matrice de connectivité de longueur d'onde de noeud intérieur comprend : la construction, pour chaque noeud, de la matrice de connectivité de longueur d'onde de noeud intérieur respective conformément au type du noeud,
si le noeud est un noeud optique-optique, la matrice de connectivité de longueur d'onde de noeud intérieur construite est une matrice n*n ;
si le noeud est un noeud électrique-électrique, la matrice de connectivité de longueur d'onde de noeud intérieur construite est une matrice 1*1;
si le noeud est un noeud optique-électrique, la matrice de connectivité de longueur d'onde de noeud intérieur construite est une matrice n*1; et
si le noeud est un noeud électrique-optique, la matrice de connectivité de longueur d'onde de noeud intérieur construite est une matrice 1*n,
dans lequel n est un nombre total des longueurs d'onde.

4. Procédé de calcul pour l'attribution de longueur d'onde selon l'une quelconque des revendications 1 à 3, dans lequel l'exécution de l'opération sur la matrice de connectivité de longueur d'onde de noeud intérieur de chaque noeud comprend séquentiellement :
l'exécution de l'opération sur les matrices de connectivité de longueur d'onde de noeud intérieur du premier noeud et d'un deuxième noeud conformément à l'approche d'opération matricielle prédéterminée, le résultat de l'opération formant une nouvelle matrice ; l'exécution ensuite de l'opération matricielle sur la nouvelle matrice et sur la matrice de connectivité de longueur d'onde de noeud intérieur d'un troisième noeud pour obtenir un autre résultat ; et l'exécution de l'opération matricielle sur l'autre résultat et sur la matrice de connectivité de longueur d'onde de noeud intérieur d'un quatrième noeud, et ainsi de suite, jusqu'à ce que le calcul matriciel pour le dernier noeud ait été effectué.

**5.** Procédé de calcul pour l'attribution de longueur d'onde selon la revendication 1, dans lequel tout élément $z_{ij}$ dans la matrice Z est indiqué par $z_{ij} = Min(x_{i1} + y_{1j}, x_{i2} + y_{2j},...,x_{in} + y_{nj})$, , qui représente un coût de connexion minimal d'une longueur d'onde i au niveau d'un port d'entrée d'un noeud correspondant à la matrice X à une longueur d'onde j au niveau d'un port de sortie d'un noeud correspondant à la matrice Y.

**6.** Procédé de calcul pour l'attribution de longueur d'onde selon la revendication 1 ou 5, comprenant en outre : l'enregistrement d'une valeur de r correspondant à un élément $z_{ij}$ qui a une valeur minimum parmi les éléments dans la matrice Z, lorsque l'opération matricielle est effectuée sur les matrices de connectivité de longueur d'onde de noeud intérieur de deux noeuds quelconques.

**7.** Procédé de calcul pour l'attribution de longueur d'onde selon la revendication 6, comprenant en outre : après que les opérations matricielles sur les matrices de connectivité de longueur d'onde de noeud intérieur de tous les noeuds ont été effectuées, la sélection d'un élément avec une valeur minimale dans une matrice de résultat obtenue par l'opération matricielle, et l'exécution d'une attribution de longueur d'onde pour les noeuds sur le trajet d'acheminement conformément à une séquence r correspondant à l'élément.

**8.** Dispositif de calcul pour l'attribution de longueur d'onde, **caractérisé en ce qu'**il comprend : un module de construction de matrice et un module d'opération matricielle, dans lequel
le module de construction de matrice est configuré pour construire, pour chaque noeud sur un trajet d'acheminement, une matrice de connectivité de longueur d'onde de noeud intérieur respective dont un élément représente un coût de connexion entre une longueur d'onde dans un port d'entrée et une longueur d'onde dans un port de sortie du noeud, et envoyer la matrice de connectivité de longueur d'onde de noeud intérieur construite au module d'opération matricielle ; et
le module d'opération matricielle est configuré pour effectuer une opération sur la matrice de connectivité de longueur d'onde de noeud intérieur construite de chaque noeud, séquentiellement d'un premier noeud sur le trajet d'acheminement à un dernier noeud sur le trajet d'acheminement, conformément à une approche d'opération matricielle prédéterminée ;
dans lequel l'opération matricielle prédéterminée est $\Delta$, et l'approche d'opération matricielle prédéterminée est indiquée par $Z = X \Delta Y = \underset{r=1}{\overset{n}{Min}}\left(x_{ir} + y_{rj}\right)$, où X et Y représentent les matrices de connectivité de longueur d'onde de noeud intérieur de deux noeuds quelconques sur le trajet d'acheminement respectivement, n représente un nombre total des longueurs d'onde et $x_{ir}$ et $y_{rj}$ sont des éléments dans les matrices X et Y respectivement et Z est la matrice de résultat final.

**9.** Dispositif de calcul pour l'attribution de longueur d'onde selon la revendication 8, comprenant en outre un module d'attribution de longueur d'onde configuré pour effectuer une attribution de longueur d'onde conformément à un résultat de l'opération effectuée par le module de calcul de matrice,
dans lequel le module d'opération matricielle est en outre configuré pour envoyer le résultat au module d'attribution de longueur d'onde.

Fig. 1

```
constructing, for each node on a routing     ⟋ 101
path, a respective inner-node wavelength
        connectivity matrix
```

```
performing an operation on the inner-node    ⟋ 102
   wavelength connectivity matrix of each
   node, sequentially from a first node to a
  last node on the routing path, according to
     a preset matrix operation approach
```

```
selecting a matrix element with a minimum    ⟋ 103
  value from a result matrix obtained by the
       matrix operation;  and performing
 wavelength assignment according to the r-
    sequence corresponding to this element
```

Fig. 2

| Electric | Electric | | Electric | Optical | | Optical | Electric | | Electric | Electric |

Node A        Node B                                    Node E            Node F

| Optical | Optical | | Optical | Optical |

Node C              Node D

Fig. 3

```
┌─────────────────────────┐
│   Matrix construction   │
│         module          │
└─────────────────────────┘
             │
             ▼
┌─────────────────────────┐
│    Matrix operation     │
│         module          │
└─────────────────────────┘
             │
             ▼
┌─────────────────────────┐
│       Wavelength        │
│   assignment module     │
└─────────────────────────┘
```

**EP 2 562 950 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2003198227 A1
- EP 1303160 A2
- US 6038390 A